# EUROPÄISCHE PATENTSCHRIFT

(11) **EP 1 230 177 B1**
(45) Veröffentlichungstag und Bekanntmachung des Hinweises auf die Patenterteilung: **29.11.2006**
(21) Anmeldenummer: 00960627.8
(22) Anmeldetag: 08.09.2000
(51) Int. Cl.: C03B 33/09, B23K 26/00

(54) **VERFAHREN UND VORRICHTUNG ZUM SCHNEIDEN EINES FLACHEN WERKSTÜCKES AUS SPRÖDBRÜCHIGEM WERKSTOFF**
METHOD AND DEVICE FOR CUTTING A FLAT WORKPIECE THAT CONSISTS OF A BRITTLE MATERIAL
PROCEDE ET DISPOSITIF DE COUPE D'UNE PIECE PLANE REALISEE DANS UN MATERIAU FRAGILE

(30) Priorität: 20.11.1999 DE 19955824
(43) Veröffentlichungstag der Anmeldung: 14.08.2002
(73) Patentinhaber: Schott AG, 55122 Mainz (DE)
(72) Erfinder: HAUER, Dirk, 26954 Nordenham-Ellwürden (DE); GEISSLER, Heinz-Georg, D-65510 Hünstetten (DE)
(74) Vertreter: Fuchs Mehler Weiss & Fritzsche
(86) Internationale Anmeldenummer: PCT/EP2000/008779
(87) Internationale Veröffentlichungsnummer: WO 2001/038242

(56) Entgegenhaltungen:
- US-A- 3 932 726
- US-A- 5 871 134

## Beschreibung

Die Erfindung bezieht sich auf ein Verfahren zum Schneiden eines flachen Werkstückes aus sprödbrüchigem Werkstoff, insbesondere Glas oder Keramik, mit einem Laserstrahl, durch Erzeugen einer Relativbewegung zwischen dem Laserstrahl und dem flachen Werkstück unter Bewegen des Laserstrahles entlang einer vorgegebenen Schneidlinie mit Induzierung einer thermomechanischen Spannung, ausgehend von einem mechanisch erzeugten Initialriß. Eine bevorzugte Anwendung ist dabei das Schneiden von Flachglas.

Die Erfindung bezieht sich ferner auf eine Vorrichtung zum Schneiden eines derartigen flachen Werkstückes mittels eines Laserstrahles.

Konventionelle Trennverfahren für Flachglas basieren darauf, mittels eines Diamanten oder eines Schneidrädchens zunächst eine Ritzspur im Glas zu generieren, um das Glas anschließend durch eine äußere mechanische Kraft entlang der so erzeugten Schwachstelle zu brechen. Nachteilig ist bei diesem Verfahren, daß durch die Ritzspur Partikel (Splitter) aus der Oberfläche gelöst werden, die sich auf dem Glas ablagern können und dort beispielsweise zu Kratzern führen können. Ebenfalls können sogenannte Ausmuschelungen an der Schnittkante entstehen, die zu einem unebenen Glasrand führen. Weiterhin führen die beim Ritzen entstehenden Mikrorisse in der Schnittkante zu einer verringerten mechanischen Beanspruchbarkeit, d. h. zu einer erhöhten Bruchgefahr.

Ein Ansatz, sowohl Splitter als auch Ausmuschelungen und Mikrorisse zu vermeiden, besteht im Trennen von Glas auf der Basis thermisch generierter mechanischer Spannung. Hierbei wird eine Wärmequelle, die auf das Glas gerichtet ist, mit fester Geschwindigkeit relativ zu dem Glas bewegt und so eine derart hohe thermomechanische Spannung aufgebaut, daß das Glas Risse bildet. Der notwendigen Eigenschaft der Wärmequelle, die thermische Energie lokal, d. h. mit einer Genauigkeit besser einen Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt.

Dieses Laserstrahl-Schneidverfahren, das durch eine lokale Erwärmung durch den fokussierten Laserstrahl in Verbindung mit einer Kühlung von außen eine thermomechanische Spannung bis über die Bruchfestigkeit des Werkstoffes induziert, ist durch mehrere Schriften bekannt geworden. Beispielsweise wird auf die DE 43 05 107 C2, die DE 693 04 194 T2 oder die EP 0 872 303 A2 hingewiesen.

Dieses Verfahren unterscheidet sich grundsätzlich von dem beispielsweise aus der EP 0 062 482 A 1 oder der US 5,120,926 bekannten Laserstrahl-Schneidverfahren, bei dem ein Aufschmelzen des Glases unter Ausbildung einer Schnittfuge stattfindet, wobei durch ein Gas die Schnittfuge ständig sauber geblasen wird.

Das erstgenannte Laserstrahl-Schneidverfahren hat sich aus den verschiedensten Gründen als das überlegenere Verfahren erwiesen und in der Praxis durchgesetzt. Von ihm geht auch die Erfindung aus.

Es erfordert typischerweise einen sogenannten Start- oder Initialriß am Anfang der gewünschten Schneidlinie, indem typischerweise durch ein Ritzwerkzeug mechanisch eine Schwachstelle auf der Glasoberfläche oder an der Glaskante, ein Anritzen, erzeugt wird. Die vom Laserstrahl auf der Schneidlinie aufgebaute thermomechanische Spannung führt dann zu einem Bruch des Glases, der von der Schwachstelle ausgeht. Diese Initialrißerzeugung wird beispielsweise in der US 4,044,936 beschrieben.

Im bekannten Fall wird der Initialriß bei unterbrochener Relativbewegung zwischen Laserstrahl und zu schneidendem flachen Werkstück, d.h. "stehend", in einem in sich abgeschlossenen separaten Anritzprozeß erzeugt, indem das Ritzwerkzeug mit einer vorgegebenen mechanischen Kraft auf die Glasoberfläche gedrückt wird.

Die Nachteile der bekannten Methode sind:

Die Schneidverfahrensdauer wird jeweils um einige Sekunden verlängert, da vor jedem Laserschnitt ein Initialriß erzeugt werden muß. Ferner ist die Anritzdauer relativ lang, so daß die Gefahr einer Verletzung des Glases unter Splitterbildung entsteht.

US-A-5 871 134 offenbart ein Verfahren und eine Vorrichtung entsprechend den Merkmalen der Oberbegriffes der beiden unabhängigen Ansprüche 1 und 4. Hier ist das Anritzwerkzeug 13 bzw. 16 an einer Schneidbrücke oberhalls des zu schneidenden Glasbandes angeordnet. Zum Erzeugen des initialrisses zu Beginn der schneidbewegung wird das Anritzwerkzeug von ober auf das Glasband abgesenkt und danach wieder angehoben.

Der Erfindung liegt die Aufgabe zugrunde, das eingangs bezeichnete Verfahren so zu führen bzw. die eingangs bezeichnete Vorrichtung so auszubilden, daß sich die Schneidprozeßzeiten verringern und die Gefahr einer Verletzung des sprödbrüchigen Werkstoffes sehr gering ist.

Dieses Problem wird durch das verfahren nach Anspruch 1 und durch die Vorrichtung nach Anspruch 4 gelöst.

Die Lösung dieser Aufgabe gelingt bei dem Verfahren zum Schneiden eines flachen Werkstückes aus sprödbrüchigem Werkstoff mit einem Laserstrahl durch Erzeugen einer Relativbewegung zwischen dem Laserstrahl und dem flachen Werkstück unter Bewegen des Laserstrahles entlang einer vorgegebenen Schneidlinie mit Induzierung einer thermomechanischen

Spannung, ausgehend von einem mechanisch erzeugten Initialriß, gemäß der Erfindung dadurch, daß der Initialriß gekoppelt mit der Startschneidbewegung des Laserstrahles erzeugt wird.

Bei der Vorrichtung zum Schneiden eines flachen Werkstückes aus sprödbrüchigem Werkstoff mit einem Laserstrahl, mit einer Antriebsanordnung zum Erzeugen einer Relativbewegung zwischen dem fokussierten Laserstrahl und dem flachen Werkstück unter Bewegen des Laserstrahles entlang einer vorgegebenen Schneidlinie mit Induzierung einer thermomechanischen Spannung, und mit einem Anritzwerkzeug zur Erzeugung eines Initialrisses am Beginn der Schneidlinie, gelingt die Lösung dieser Aufgabe erfindungsgemäß dadurch, daß eine Einrichtung zum Verfahren des Anritzwerkzeuges vorgesehen ist, die steuerungsmäßig derart mit der Schneidbewegung des Laserstrahles gekoppelt ist, daß mit dem Start der Schneidbewegung oder kurz danach das Anritzwerkzeug in kurzzeitigem Anriß-Wirkeingriff mit dem flachen Werkstück bringbar ist.

Bei dem erfindungsgemäßen Prinzip wird somit der Initialriß "fliegend", d.h. in derselben Bewegung, mit der der Schnitt durch den Laserstrahl entsteht, ohne die Relativbewegung zu stoppen, erzeugt. Dadurch ergeben sich nachstehende Vorteile gegenüber einem in sich abgeschlossenen separaten Anritzprozeß.
- Für jeden Schnitt ergibt sich eine Prozeßzeitverkürzung von einigen Sekunden.
- Die Verletzung des Glases wird durch die kurze Anritzdauer, die das "fliegende" Anritzen bedingt, extrem gering gehalten. Dadurch werden Splitter vermieden und die Genauigkeit gesteigert.

Die DE 44 11 037 A 1 beschreibt ein Verfahren und eine Vorrichtung zum Abtrennen des Randabschnittes eines sich drehenden Hohlglases bei dessen Fertigung mittels eines Laserstrahles in Verbindung mit einem mechanisch erzeugten Initialriß. Hierbei wird zunächst mit dem Laserstrahl eine thermomechanische Spannung entlang der Schneidlinie in dem sich drehenden Hohlglas erzeugt, und erst danach, losgelöst vom Laserstrahl, mechanisch ein Startiß erzeugt. Es wird daher im bekannten Fall der Startiß ohne direkte Kopplung mit der Laserstrahlbewegung, sozusagen "irgendwann einmal", separat mechanisch erzeugt, z.B. über eine Zeitsteuerung, und nicht gekoppelt mit der Startschneidbewegung des Laserstrahles vor dem Laserstrahlschneiden wie im Fall der Erfindung.

Der vorgenannte Stand der Technik ist prinzipbedingt auf das Schneiden von Hohlglas beschränkt, wo es sozusagen keinen Anfang und kein Ende der Schneidlinie gibt, wogegen die Erfindung sich auf das Schneiden von Flachglas bezieht, bei dem die eine Kante den Anfang und die andere Kante das Ende der Schneidlinie definiert. Nur bei einem flachen Werkstück, das von dem Laserstrahl quer überfahren wird, tritt das geschilderte, die Aufgabenstellung indizierende, Problem des Unterbrechens der Laserstrahlbewegung zum Setzen des Startrisses beim eingangs beschriebenen Stand der Technik auf, was zu dem erfindungsgemäßen "fliegenden Anritzen" führte.

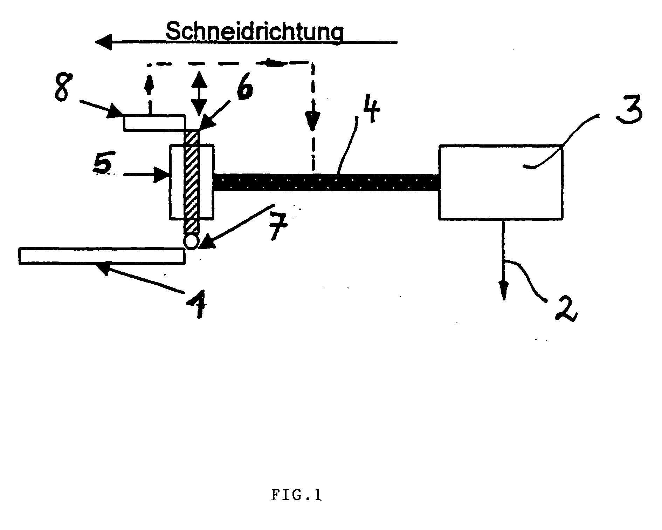

Ausgestaltungen der Erfindung sind in den Unteransprüchen gekennzeichnet und werden im folgenden anhand der Beschreibung eines in der Zeichnung schematisch dargestellten Ausführungsbeispieles einer erfindungsgemäßen Vorrichtung beschrieben.

Ein flaches Glassubstrat 1 soll von einem Laserstrahl 2 eines Laserscanners 3 entlang einer vorgegebenen Schneidlinie geschnitten werden.

Die entsprechenden Vorrichtungen sind einschlägig bekannt, z.B. durch die eingangs zitierten Schriften, und brauchen daher hier nicht mehr näher erläutert zu werden. Zwischen dem Laserstrahl 2 und dem Glassubstrat 1 besteht entlang der angegebenen Schneidrichtung eine Relativbewegung, wobei typischerweise das Glassubstrat feststeht und der Laserstrahl 2 bewegt wird. Umgekehrt kann auch der Laserstrahl 2 feststehend sein und das Glassubstrat 1 einen Vorschub erfahren.

Über die symbolisch dargestellte Verbindung 4 ist ein Hubmagnet 5 steuerungstechnisch mit dem Scanner 3 verbunden. Dieser weist eine Schaltfahne 6 auf, die, wie durch Pfeile angedeutet, je nach Ansteuerung des Hubmagneten 5 hoch und runter bewegt werden kann. Am unteren, glassubstratseitigen Ende der Schaltfahne 6 ist ein Anritzwerkzeug 7, z.B. ein Hartmetallrädchen, angebracht. Der Schaltfahne 6 ist an einer geeigneten Stelle ein Positionssensor 8 zugeordnet, dessen Ausgangssignal auf den Steuereingang des Hubmagneten 5 geschaltet ist, wie es durch die gestrichelte Linie angedeutet ist.

Das erfindungsgemäße "fliegende" Anritzen funktioniert wie folgt: Das Hartmetallrädchen 7 wird in der beginnenden Schneidbewegung gegen den Rand des Glassubstrates 1 bewegt. Wenn es ihn berührt, erfährt es eine leichte Hubbewegung von max. 1 mm. Diese relative Positionsveränderung des Rädchens wird von dem Sensor 8 erkannt und daraufhin wird durch die Steuerung ein schnelles Anheben des Rädchens um ca. 5 mm mittels des Hubmagneten 5 veranlaßt.

Das Anheben erfolgt in einem Zeitbereich von ca. 0 bis 2 sec.

Die Hubbewegung des Anritzwerkzeuges kann auch durch einen hydraulischen oder pneumatischen Aktuator erfolgen. Der Vorteil des Hubmagneten liegt jedoch in seiner schnellen Reaktionszeit.

Durch das erfindungsgemäße "fliegende" Anritzen werden die Verletzungen im Glas so gering gehalten, daß sie mit bloßem Auge nicht erkennbar sind.

Das Wesen der Erfindung besteht in dem "fliegenden" Anritzen, d.h. einem Anritzen in einer Bewegung mit dem Laserstrahlschnitt. Dieses Anritzen funktioniert zwar wie am dargestellten Beispiel beschrieben am schnellsten, kann aber in langsamerer Abfolge (aber immer noch in der Schnittbewegung) auch anders (z.B. falls das Anritzwerkzeug keine Schaltfahne besitzt und rein signalgesteuert bewegt wird) realisiert werden.

## Patentansprüche

1. Verfahren zum Schneiden eines flachen Werkstückes aus sprödbrüchigem Werkstoff entlang einer vorgegebenen Schnittlinie nach dem Laser-Strahl-Schneidverfahren mit den Schritten:
- Richten eines fokusierten Laserstrahles auf die Schnittlinie,
- Erzeugen einer Relativbewegung zwischen Laserstrahl und Werkstück zur Führung des Laserstrahles in Verbindung mit einer Kühlung von außen auf der Schnittlinie unter Induzierung einer thermomechanischen Spannung im Werkstück über die Bruchfestigkeit des Werkstoffes entlang der Schnittlinie hinaus,
- Anbringen eines Initialrisses durch mechanisches Anritzen des Werkstücks mittels eines Anritz-Werkzeuges am Anfang der Schnittlinie gekoppelt mit der Start-Schneidbewegung des laserstrahls
**dadurch gekennzeichnet, dass** das Anritzwerkzeug (7) in der beginnenden Schneidbewegung mit der oberen seitlichen Kante des Werkstückes (1) unter Erzeugung des Initialrisses kurzzeitig in Kontakt gebracht und selbsttätig schnell um einen vorgegebenen Hub angehoben wird.

2. Verfahren nach Anspruch 1, **dadurch gekennzeichnet, dass** das Anheben in einem Zeitbereich bis zu zwei Sekunden erfolgt.

3. Verfahren nach Anspruch 1 oder 2, **dadurch gekennzeichnet, dass** zum Erzeugen der Relativbewegung der Laserstrahl bei feststehendem Werkzeug mittels eines Laserscanners entlang der Schnittlinie bewegt wird.

4. Vorrichtung zum Schneiden eines flachen Werkstückes (1) aus sprödbrüchigem Werkstoff entlang einer vorgegebenen Schnittlinie nach dem Laserstrahl-Schneidverfahren mit:
- Mitteln zum Richten eines fokussierten Laserstrahles (2) auf die Schnittlinie
- Einer Antriebsanordnung zum Erzeugen einer Relativbewegung zwischen dem fokussierten Laserstrahl (2) und dem flachen Werkstück (1) zur Führung des Laserstrahles in Verbindung mit einer Kühlung von außen auf der Schnittlinie unter Induzierung einer thermomechanischen Spannung im Werkstück über die Bruchfestigkeit des Werkstoffes hinaus, und mit
- Einem Anritzwerkzeug (7) zum Anbringen eines Initialrisses durch mechanisches Anritzen des Werkstückes (1) am Anfang der Schnittlinie gekoppelt mit der Start-Schneidebewegung des laserstrahls
**dadurch gekennzeichnet, dass** das Anritzwerkzeug neben der oberen Kante des Werkstückes angeordnet ist, und eine Einrichtung (5, 6, 8) zum schnellen Anheben des Anritzwerkzeuges(7) vorgesehen ist, die steuerungstechnisch derart mit der Schneidbewegung gekoppelt ist, dass mit dem Start der Schneidbewegung, oder im Vergleich zur Gesamt-Schneidzeit kurz danach, das Anritzwerkzeug (7) in kurzzeitigem Anriß-Wirkeingriff mit der oberen seitlichen Kante des Werkstückes unter Erzeugung des Initialrisses steht und danach schnell angehoben wird.

5. Vorrichtung nach Anspruch 4 **dadurch gekennzeichnet, dass** die Einrichtung einen über seinen Steuereingang von der Schneidbewegung des Laserstrahles aktivierten Hubmagneten (5) mit einer Schaltfahne (6) aufweist, an deren einem Ende das Anritzwerkzeug (7) angebracht ist, und der ein Positionssensor (8) zur Erfassung der vertikalen Stellung der Schaltfahne (6) zugeordnet ist, dessen Ausgangssignal auf den Steuereingang des Hubmagneten geschaltet ist, und dass die Steuerung des Hubmagneten (5) so getroffen ist, dass, nachdem das Anritzwerkzeug (7) in der beginnenden Schneidbewegung gegen die obere Kante des Werkstückes (1) bewegt und eine vertikale Positionsänderung der Schaltfahne (6) ausgelöst wird, über das Ausgangssignal des Sensors (8) ein Aktivieren des Hubmagneten (5) und damit ein schnelles Anheben der Schaltfahne (6) mit dem Anritzwerkzeug (7) erfolgt.

6. Vorrichtung nach Anspruch 5 **dadurch gekennzeichnet, dass** die Einrichtung durch einen hydraulischen oder pneumatischen Aktor gebildet ist.

## Claims

1. Method for cutting a flat workpiece of brittle material along a predetermined cutting line by the laser-beam cutting method, with the steps of:
- directing a focused laser beam onto the cutting line,
- producing a relative movement between the laser beam and the workpiece for guiding the laser beam in conjunction with external cooling on the cutting line while inducing a thermomechanical stress greater than the breaking strength of the material in the workpiece along the cutting line,
- imparting an initial score by mechanically scoring the workpiece by means of a scoring tool at the beginning of the cutting line, coupled with the initial cutting movement of the laser beam,
**characterized in that** the scoring tool (7) is briefly brought into contact with the upper lateral edge of the workpiece (1) in the initial cutting movement, thereby producing the initial score, and is automatically raised rapidly by a predetermined amount of lift.

2. Method according to Claim 1, **characterized in that** the raising takes place in a time interval of up to two seconds.

3. Method according to Claim 1 or 2, **characterized in that**, for producing the relative movement, the laser beam is moved along the cutting line by means of a laser scanner while the tool is stationary.

4. Device for cutting a flat workpiece (1) of brittle material along a predetermined cutting line by the laser-beam cutting method, comprising:
- means for directing a focused laser beam (2) onto the cutting line
- a drive arrangement for producing a relative movement between the focused laser beam (2) and the flat workpiece (1) for guiding the laser beam in conjunction with external cooling on the cutting line while inducing a thermomechanical stress greater than the breaking strength of the material in the workpiece, and comprising
- a scoring tool (7) for imparting an initial score by mechanically scoring the workpiece (1) at the beginning of the cutting line, coupled with the initial cutting movement of the laser beam,
**characterized in that** the scoring tool is arranged next to the upper edge of the workpiece, and a mechanism (5, 6, 8) for rapidly raising the scoring tool (7) is provided, which mechanism is coupled in control terms with the cutting movement in such a way that, with the start of the cutting movement, or shortly thereafter in comparison with the overall cutting time, the scoring tool (7) is in brief scoring engagement with the upper lateral edge of the workpiece while producing the initial score, and after that is rapidly raised.

5. Device according to Claim 4, **characterized in that** the mechanism has a lifting magnet (5), which is activated via its control input by the cutting movement of the laser beam and has a switching tab (6), to one end of which the scoring tool (7) is attached, and to which a position sensor (8) for sensing the vertical position of the switching tab (6) is assigned, the output signal of which sensor is switched to the control input of the lifting magnet, and **in that** the control of the lifting magnet (5) is such that, after the scoring tool (7) moves towards the upper edge of the workpiece (1) in the initial cutting movement and a change in the vertical position of the switching tab (6) is initiated, activation of the lifting magnet (5), and consequently rapid raising of the lifting tab (6) with the scoring tool (7), takes place by means of the output signal of the sensor (8).

6. Device according to Claim 5, **characterized in that** the mechanism is formed by a hydraulic or pneumatic actuator.

## Revendications

1. Procédé pour découper une pièce plate en un matériau fragile le long d'une ligne de coupe prédéterminée par une opération de coupe par faisceau laser, lequel procédé comporte les étapes qui consistent à :
- orienter un faisceau laser concentré sur la ligne de coupe,
- créer un déplacement relatif entre le faisceau laser et la pièce en vue de guider le faisceau laser sur la ligne de coupe en même temps qu'on la refroidit par l'extérieur et en induisant dans la pièce une contrainte thermomécanique qui dépasse la résistance à la rupture du matériau le long de ligne de coupe,
- créer une fissure initiale au début de la ligne de coupe en griffant la pièce mécaniquement au moyen d'un outil à griffer, de manière couplée au début du déplacement de coupe du faisceau laser,
**caractérisé en ce qu'**au début du déplacement de coupe, l'outil à griffer (7) est amené brièvement en contact avec le bord latéral supérieur de la pièce (1), ce qui crée la fissure initiale, et est automatiquement relevé rapidement sur une course prédéterminée.

2. Procédé selon la revendication 1, **caractérisé en ce que** le relèvement s'effectue en une durée qui peut aller jusqu'à deux secondes.

3. Procédé selon les revendications 1 ou 2, **caractérisé en ce que** pour créer le déplacement relatif, on déplace le faisceau laser le long de la ligne de coupe au moyen d'un balayage laser, l'outil restant fixe.

4. Dispositif pour couper une pièce plate (1) en un matériau fragile le long d'une ligne de coupe prédéterminée par une opération de coupe par faisceau laser, lequel dispositif présente :
des moyens d'orientation d'un faisceau laser concentré (2) sur la ligne de coupe,
un agencement d'entraînement qui crée un déplacement relatif entre le faisceau laser concentré (2) et la pièce plate (1) en vue de guider le faisceau laser sur la ligne de coupe en même temps qu'on la refroidit par l'extérieur, pour induire dans la pièce une contrainte thermomécanique supérieure à la résistance à la rupture de la pièce et
un outil à griffer (7) qui forme une fissure initiale en griffant mécaniquement la pièce (1) au début de la ligne de coupe, de manière couplée au début du déplacement de coupe du faisceau laser,
**caractérisé en ce que** l'outil à griffer est disposé à côté du bord supérieur de la pièce et **en ce qu'**un dispositif (5, 6, 8) de relèvement rapide de l'outil à griffer (7) est prévu et est accouplé au déplacement de coupe par la commande, de telle sorte qu'au début du déplacement de coupe ou après une durée plus courte que la durée totale de coupe, l'outil à griffer (7) reste griffe brièvement le bord latéral supérieur de la pièce, crée la fissure initiale et est ensuite rapidement relevé.

5. Dispositif selon la revendication 4, **caractérisé en ce que** le dispositif présente un aimant (5) de relèvement activé par l'intermédiaire de son entrée de commande par le déplacement de coupe du faisceau laser, lequel aimant présente une patte de commutation (6) à une extrémité de laquelle est associé l'outil à griffer (7) et à laquelle un détecteur de position (8) est associé pour détecter la position verticale de la patte de commutation (6) et dont le signal de sortie est raccordé à l'entrée de commande de l'aimant de relèvement, et **en ce que** la commande de l'aimant de relèvement (5) est conçue de telle sorte qu'après que l'outil à griffer (7) a été déplacé vers le bord supérieur de la pièce (1) au début du déplacement de coupe et qu'une modification verticale de la position de la patte de commutation (6) a été déclenchée, l'aimant de relèvement (5) est activé par l'intermédiaire du signal de sortie du détecteur (8), ce qui entraîne un relèvement rapide de la patte de commutation (6) avec l'outil à griffer (7).

6. Dispositif selon la revendication 5, **caractérisé en ce que** le dispositif est formé par un actionneur hydraulique ou pneumatique.
